# FASCICULE DE BREVET EUROPEEN

(11) **EP 2 060 748 B1**
(45) Date de publication et mention de la délivrance du brevet: **05.04.2017**
(21) Numéro de dépôt: 08168948.1
(22) Date de dépôt: 12.11.2008
(51) Int. Cl.: F01D 21/00, F01D 21/02, F01D 21/04

(54) **Dispositif de détection de rupture d'un arbre de turbomachine**
Vorrichtung zum Erkennen eines Wellenbruchs eines Turbotriebwerks
Device for detecting a breakage in a turbomachine shaft

(30) Priorité: 13.11.2007 FR 0707940
(43) Date de publication de la demande: 20.05.2009
(73) Titulaire: SNECMA, 75015 Paris (FR)
(72) Inventeur: Bart, Jacques, 91450, Soisy sur Seine (FR); Escure, Didier René André, 77176, Nandy (FR); Magret, Cédric Kevin, 75012, Paris (FR); Rousselin, Stéphane, 77850, Hericy (FR)
(74) Mandataire: Boura, Olivier

(56) Documents cités:
- EP-A- 1 327 751
- GB-A- 2 256 486
- US-A1- 2003 091 430
- US-A1- 2005 047 913
- US-B1- 6 494 046
- US-B2- 7 100 354

## Description

La présente invention concerne la détection de la rupture d'un arbre sur une turbomachine, notamment de type aéronautique. Elle concerne en particulier un dispositif conçu pour cette détection.

Une turbomachine comporte un compresseur, une chambre de combustion et une turbine. Le rôle du compresseur est d'accroître la pression de l'air fourni à la chambre de combustion. Le rôle de la turbine est d'assurer l'entraînement en rotation du compresseur en prélevant une partie de l'énergie de pression des gaz chauds sortant de la chambre de combustion et en la transformant en énergie mécanique.

Le compresseur et la turbine sont constitués d'un premier ensemble de pièces fixes constituant le stator et un second ensemble de pièces, susceptible d'être mis en rotation par rapport au stator, constituant le rotor.

Le rotor du compresseur et le rotor de la turbine forment un ensemble solidairement relié par un arbre tournant. En cas de rupture de cet arbre, la liaison mécanique entre le rotor de compresseur et le rotor de turbine est perdue. Dans ce cas, le rotor de turbine consomme subitement à lui-seul toute l'énergie provenant de la chambre de combustion sans la transmettre au rotor et est donc en survitesse. Les conséquences de cette survitesse peuvent être dangereuses et peuvent conduire en un temps très bref à l'autodestruction de la turbomachine.

Pour contenir cette survitesse, plusieurs actions urgentes sont nécessaires : d'une part, couper le carburant pour interrompre l'alimentation en énergie et, d'autre part, dissiper l'énergie du rotor de turbine pour la réduire.

Des exemples de techniques de dissipation d'énergie du rotor de turbine sont décrites dans les documents US 4498291, US 4503667, US 4505104.

Pour une mise en oeuvre efficace des actions urgentes, il est nécessaire de détecter le plus rapidement possible la rupture d'arbre et de transmettre rapidement cette information aux organes de la turbomachine permettant de déclencher ces actions urgentes, en particulier la coupure de l'alimentation en carburant.

Un dispositif connu pour détecter la rupture d'arbre de la turbomachine consiste à utiliser une paire de capteurs de vitesse, chaque capteur étant disposé respectivement à proximité des extrémités amont et aval de l'arbre. Lorsque l'état de l'arbre est intègre, les régimes mesurées par les deux capteurs sont quasiment identiques. Une différence excessive entre le régime du rotor de compresseur, mesuré par le capteur de vitesse amont, et le régime de rotor de turbine, mesuré par le capteur de vitesse aval, est interprété par un comparateur de régime comme une rupture d'arbre. Le comparateur peut alors déclencher les actions urgentes qui s'imposent pour éviter la survitesse du rotor de turbine. Des exemples d'un tel dispositif de détection de rupture d'arbre sont décrits dans les documents GB 2256486 et US 6494046.

Toutefois, l'implantation du capteur de régime à proximité de l'extrémité aval de l'arbre de rotor de turbomachine se révèle délicat puisque l'environnement de la turbine est sévère en raison de son exposition à des températures très élevées, la turbine étant disposée directement en aval de la chambre de combustion.

Par ailleurs, l'utilisation d'une pluralité de capteurs de vitesse conduit à rendre le dispositif de détection relativement complexe et alourdit la masse globale de la turbomachine. Il est connu que la diminution de la masse est une préoccupation constante dans l'aéronautique.

Le document US 7100354 décrit un système électromécanique de détection de la rupture d'un arbre comportant un piston à ressorts prétendus apte à se déplacer vers des capteurs de présence en cas de rupture de l'arbre.

La présente invention a pour objectif de proposer un dispositif de détection de rupture d'un arbre de rotor de turbomachine ne nécessitant pas l'installation de capteur au niveau de la turbine et permettant de palier aux problèmes précités.

Cet objectif est atteint par la mise en oeuvre d'un dispositif de détection de rupture d'un arbre de turbomachine selon la revendication 1.

Lorsque l'arbre est intègre, la tige est entraînée en rotation à la même vitesse que l'arbre au moyen de la fixation solidaire de l'extrémité aval de la tige avec l'extrémité aval de l'arbre. De même, cette rotation étant transmise jusqu'en amont de la tige et de l'arbre, l'extrémité amont de la tige tourne à la même vitesse que l'arbre.

En cas de rupture de l'arbre, la tige continue à être entraînée en rotation selon le même régime que l'extrémité aval de l'arbre. Puisque la rotation de l'extrémité aval de l'arbre n'est plus transmise correctement à l'extrémité amont de l'arbre, un déphasage se créé entre l'extrémité amont de la tige et l'extrémité amont de l'arbre. Le capteur, mesurant le régime de l'extrémité amont de la tige par rapport à l'extrémité amont de l'arbre, détecte ce déphasage qu'il interprète comme une rupture d'arbre.

Avantageusement, le dispositif de détection de rupture d'un arbre de turbomachine selon l'invention implique une diminution de masse. Il évite l'installation d'un capteur dans la région de la turbine sur une turbomachine. Une meilleure maîtrise de détection de rupture d'arbre évite l'utilisation au niveau de la turbine de moyens mécaniques massifs de dissipation d'énergie.

Avantageusement, le dispositif de détection de rupture d'un arbre de turbomachine selon l'invention est plus simple puisqu'il ne nécessite qu'un seul capteur, contrairement aux dispositifs de l'art antérieur nécessitant deux capteurs. Par ailleurs, les moyens électroniques de traitement du signal détecté par le capteur sont également simplifiés puisqu'il n'est par exemple plus nécessaire d'utiliser un comparateur de régime.

L'invention est décrite ci-dessous plus en détail, en faisant apparaître plus clairement ses autres caractéristiques et avantages, en relation avec les figures suivantes qui représentent respectivement :
- figure 1, une vue schématique d'une turbomachine ;
- figure 2, une vue en coupe de l'extrémité aval du dispositif de détection de rupture d'arbre selon l'invention ; et
- figure 3, une vue en coupe de l'extrémité amont du dispositif de détection de rupture d'arbre selon l'invention.

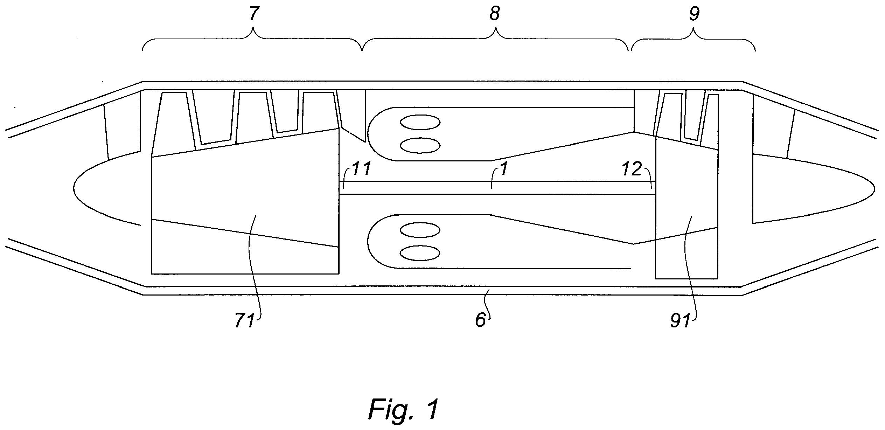

La figure 1 représente schématiquement une turbomachine comportant un carter fixe 6 constituant une partie du stator, un compresseur 7, une chambre de combustion 8 et une turbine 9. Le compresseur 7 comporte un rotor de compresseur 71 et la turbine 9 comporte un rotor de turbine 91. Le rotor de compresseur 71 et le rotor de turbine 91 sont reliés par un arbre 1, le rotor de compresseur 71 étant fixé solidairement à l'extrémité amont 11 de l'arbre 1 et le rotor de turbine 91 étant fixé solidairement à l'extrémité aval 12 de l'arbre 1. L'amont et l'aval sont définis par rapport au sens de l'écoulement du flux du fluide traversant la turbomachine.

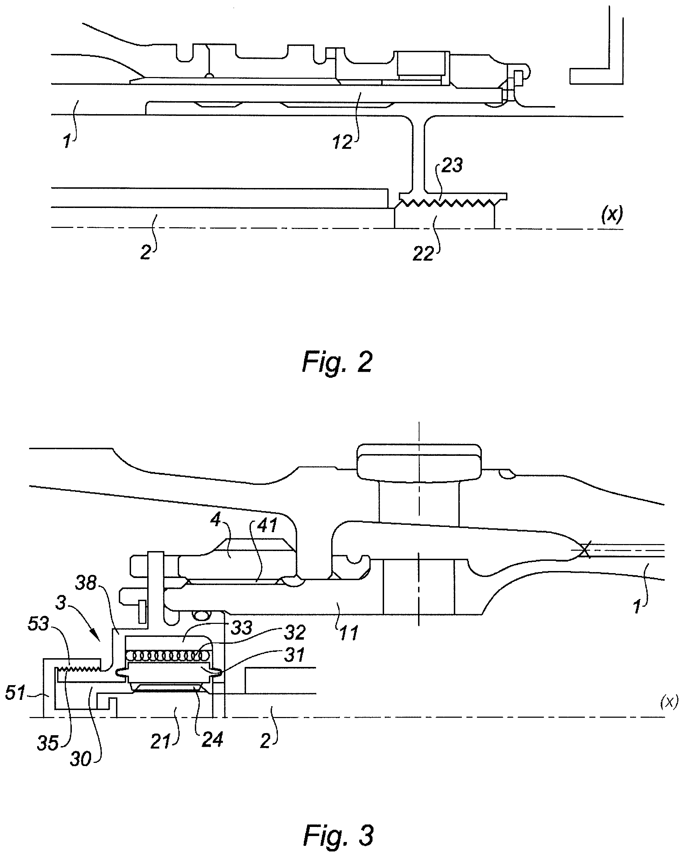

La figure 2 représente l'extrémité aval du dispositif de détection de rupture d'arbre 1 selon l'invention constituée en partie par l'arbre et une tige 2, c'est-à-dire une pièce mince et allongée. L'arbre 1 est classiquement de forme tubulaire, c'est-à-dire en forme de cylindre creux, et présente un axe de révolution (X) correspondant à également à l'axe de rotation de la turbomachine.

La tige 2 est disposée à l'intérieur de l'arbre 1 et le traverse sur sa longueur de manière coaxiale. L'extrémité aval 12 de l'arbre et l'extrémité aval 22 de la tige sont fixées solidairement. Plusieurs moyens 23 sont envisageables pour réaliser cette fixation, par exemple le collage, le soudage, le boulonnage, le vissage ou l'engrenage mécanique. Cette fixation doit être telle que l'extrémité aval 12 de l'arbre 1 doit entraîner en rotation l'extrémité aval 22 de la tige 2. Il est donc également possible d'utiliser des ergots ou des clavettes.

En cas d'utilisation du vissage pour la fixation, il est important que le sens du vissage soit tel que la rotation de l'arbre 1 contribue à visser l'extrémité aval 22 de la tige 2 sur l'extrémité aval 12 de l'arbre 1, une rotation dans le sens inverse risquant de provoquer un dévissage propre à désolidariser ces deux pièces en faisant ainsi perdre l'entraînement en rotation d'une des pièces par l'autre. Pour la réalisation du vissage, l'extrémité aval 12 de l'arbre 1 peut comporter un taraudage coopérant avec un filetage situé sur l'extrémité aval 22 de la tige 2.

En cas d'utilisation d'un engrenage mécanique pour la fixation, l'extrémité aval 12 de l'arbre 1 et l'extrémité aval 22 de la tige 2 peuvent comporter des cannelures 23 de forme complémentaires. L'utilisation de cannelures 23 est avantageuse en ce qu'elle permet facilement l'insertion et la fixation de la tige 2 depuis l'extrémité amont 11 de l'arbre 1.

La figure 3 représente l'extrémité amont du dispositif de détection de rupture d'arbre 1 selon l'invention constituée par l'arbre 1, la tige 2 et un capteur 3 susceptible de mesurer le régime de l'extrémité amont 21 de la tige 2 par rapport à l'extrémité amont 11 de l'arbre 1.

Le capteur 3 comporte un boîtier 38 et est fixé solidairement à l'extrémité amont 11 de l'arbre 1. Plusieurs moyens 4 sont envisageables pour réaliser cette fixation, par exemple le collage, le soudage, le boulonnage, le vissage ou l'engrenage mécanique. Un moyen de fixation 4 envisageable peut être constitué par un écrou 4 solidaire du capteur 3 et pouvant se visser sur l'extrémité amont 11 de l'arbre 1. La figure 3 montre un exemple de réalisation pour la mise en oeuvre de cette fixation par vissage.

Le capteur 3 se présente essentiellement sous la forme d'un cylindre creux et coaxial à l'arbre 1. L'intérieur creux 30 du capteur 3 permet d'accueillir l'extrémité amont 21 de la tige 2, lequel est libre en rotation par rapport au capteur 3 et à l'extrémité amont 11 de l'arbre 1.

Le capteur 3 représenté sur la figure 3 est du type à induction électromagnétique. Il comporte à l'intérieur du boîtier 38 un anneau mobile 31 disposé de manière coaxiale à l'arbre 1 et à la tige 2. Cet anneau mobile en rotation 31 possède une forme à symétrie de révolution, est susceptible de tourner autour de l'axe de rotation (X) et est couplé à l'extrémité amont 21 de la tige 2 par des moyens de fixation 24 identiques aux moyens fixations 23 mentionnés ci-dessus entre l'extrémité aval 12 de l'arbre et l'extrémité aval de la tige 22, par exemple au moyen de cannelures 24. Cette fixation doit être telle que l'extrémité amont 21 de la tige 2 soit susceptible d'entraîner en rotation l'anneau mobile 31 autour de son axe (X). De préférence, l'anneau mobile 3 doit être constitué de matériau résistant à l'usure tel que le polytétrafluoroéthylène (Teflon ®). Cet anneau mobile 31 comporte des aimants permanents qui peuvent être noyés au sein dudit anneau mobile 31.

Le capteur 3 comporte également à l'intérieur du boîtier 38 un bobinage 32 de fil conducteur, de préférence du cuivre. Le bobinage 32 est solidaire du boîtier 38 du capteur 3 et est disposé de manière coaxiale à l'arbre 1 et à la tige 2. Ce bobinage 32 entoure l'anneau mobile 31 de sorte que lorsque l'anneau mobile 31 est en rotation, en raison d'un différentiel de régime entre l'extrémité amont 11 de l'arbre et l'extrémité amont 21 de la tige 22, un courant induit se forme dans le bobinage 32 de fil conducteur.

Lorsque l'arbre est intègre, la tige 2 est entraînée en rotation à la même vitesse que l'arbre 1 et aucun courant électrique induit n'apparaît au niveau du bobinage 32.

En cas de rupture de l'arbre 1, la tige 2 continue à être entraînée en rotation selon le même régime que l'extrémité aval 12 de l'arbre 1. Puisque la rotation de l'extrémité aval 12 de l'arbre 1 n'est plus transmise correctement à l'extrémité amont 11 de l'arbre 1, un déphasage se créé entre l'extrémité amont 21 de la tige 2 et l'extrémité amont 11 de l'arbre 1. Le capteur 3, mesurant le régime de l'extrémité amont 21 de la tige 2 par rapport à l'extrémité amont 11 de l'arbre 1, au moyen de l'ensemble anneau mobile 31 et bobinage de fil conducteur 32, détecte ce déphasage lorsqu'un courant électrique induit se forme au niveau du bobinage 32.

Ce déphasage, correspondant à une rupture de l'arbre 1 de turbomachine, déclenche un signal d'alerte transmis à des moyens électroniques de traitement du signal permettant de couper l'alimentation de la turbomachine. Ces moyens électroniques peuvent être le calculateur électronique de régulation pleine autorité, communément appelé le FADEC (Full Authority Digital Electronics Control) ou un autre dispositif de commande de coupure d'alimentation indépendant et distinct du FADEC. Ces moyens électroniques peuvent, par exemple, être un micro-système électromécanique du type MEMS (MicroElectroMechanical System) auto-alimenté par le courant électrique induit.

Le signal d'alerte peut être transmis au moyen d'un émetteur 33 radio disposé dans le capteur 3 de manière adjacente au bobinage de fil conducteur 32. Le courant fourni par induction permet l'alimentation en énergie électrique de l'émetteur.

Le capteur 3 comporte en outre en amont un bouchon 51 destiné à assurer son étanchéité et à maintenir une rétention axiale de l'extrémité amont 21 de la tige2. Pour son montage sur le capteur 3, le bouchon 51 comporte un taraudage 53 coopérant avec un filetage 35 du capteur 3.

La tige 2 peut être rigide ou flexible. Elle peut par exemple être constituée d'un coeur métallique plein ou creux, tressé ou non, éventuellement renforcé d'une gaine de protection flexible, par exemple en plastique, en caoutchouc. La gaine peut également être métallique, telle que de l'acier, revêtue d'un polymère résistant à haute température, tel que le silicone. La flexibilité doit faciliter l'insertion de la tige 2 à travers l'arbre 1 du rotor de turbomachine.

La flexibilité de la tige 2 doit être dimensionnée de manière à ne pas présenter de nuisance en terme de comportement en torsion et en flexion capable de produire un déphasage parasite.

Bien que la figure 3 illustre un mode de réalisation préférentiel dans lequel le capteur 3 est solidaire de l'arbre 1, il est envisageable de concevoir un capteur 3 solidaire de la tige 2. Un capteur 3 ni solidaire de l'arbre 1 ni solidaire de la tige 2 et placé en amont de l'extrémité amont 11 de l'arbre 1 et de l'extrémité amont 21 de la tige 2 est également envisageable.

L'invention concerne également une turbomachine comportant un dispositif de détection de rupture d'arbre tel que décrit ci-dessus.

## Revendications

1. Turbomachine comprenant un arbre (1) doté d'une extrémité amont (11) et d'une extrémité aval (12), et un dispositif de détection de rupture de l'arbre (1), le dispositif comportant :
• une tige (2) comprenant une extrémité amont (21) et une extrémité aval (22) et disposée à l'intérieur et de manière coaxiale à l'arbre (1), l'extrémité aval (22) de la tige (2) étant fixée solidairement à l'extrémité aval (12) de l'arbre (1) et l'extrémité amont (21) de la tige (2) étant libre en rotation par rapport à l'extrémité amont (11) de l'arbre (1), et
• un capteur (3) susceptible de détecter une différence de régime de rotation entre l'extrémité amont (21) de la tige (2) par rapport à l'extrémité amont (11) de l'arbre (1).

2. Turbomachine selon la revendication 1, **caractérisée en ce que** le capteur (3) comporte un boîtier (38) fixé solidairement à l'extrémité amont (11) de l'arbre (1).

3. Turbomachine selon la revendication 2, **caractérisée en ce que** le capteur (3) se présente sous la forme d'un cylindre creux coaxial à l'arbre (1).

4. Turbomachine selon la revendication 3, **caractérisée en ce que** le capteur (3) comporte à l'intérieur du boîtier :
• un anneau mobile (31) en rotation, comportant des aimants permanents, disposé de manière coaxiale à l'arbre (1), susceptible de tourner autour de l'axe de l'arbre (1) et couplé à l'extrémité amont (21) de la tige (2), et
• un bobinage (32) de fil conducteur solidaire du boîtier (38) du capteur (3) et coaxiale à l'arbre (1).

5. Turbomachine selon la revendication 4, **caractérisée en ce que** le bobinage (32) entoure l'anneau mobile (31).

6. Turbomachine selon la revendication 4 ou 5, **caractérisée en ce que** l'anneau mobile (31) et l'extrémité amont (21) de la tige (2) sont couplés au moyen de cannelures (24).

7. Turbomachine selon l'une des revendications précédentes, **caractérisée en ce que** l'extrémité aval (12) de l'arbre (1) et l'extrémité aval (22) de la tige (2) comportent des cannelures (23) de forme complémentaire.

8. Turbomachine selon l'une des revendications précédentes, **caractérisée en ce que** le capteur (3) comporte en amont un bouchon (51).

## Patentansprüche

1. Turbomaschine, umfassend eine Welle (1), die mit einem stromaufwärtigen Ende (11) und mit einem stromabwärtigen Ende (12) ausgestattet ist, sowie eine Vorrichtung zur Erfassung eines Bruchs der Welle (1), wobei die Vorrichtung umfasst:
• eine Stange (2), die ein stromaufwärtiges Ende (21) und ein stromabwärtiges Ende (22) umfasst und die innerhalb sowie koaxial zu der Welle (1) angeordnet ist, wobei das stromabwärtige Ende (22) der Stange (2) an dem stromabwärtigen Ende (12) der Welle (1) fest angebracht ist, und wobei das stromaufwärtige Ende (21) der Stange (2) gegenüber dem stromaufwärtigen Ende (11) der Welle (1) drehfrei ist, und
• einen Sensor (3), welcher geeignet ist, eine Drehzahldifferenz zwischen dem stromaufwärtigen Ende (21) der Stange (2) und dem stromaufwärtigen Ende (11) der Welle (1) zu erfassen.

2. Turbomaschine nach Anspruch 1, **dadurch gekennzeichnet, dass** der Sensor (3) ein Gehäuse (38), welches an dem stromaufwärtigen Ende (11) der Welle (1) fest angebracht ist, umfasst.

3. Turbomaschine nach Anspruch 2, **dadurch gekennzeichnet, dass** der Sensor (3) in Form eines zu der Welle (1) koaxialen Hohlzylinders vorliegt.

4. Turbomaschine nach Anspruch 3, **dadurch gekennzeichnet, dass** der Sensor (3) innerhalb des Gehäuses umfasst:
• einen drehbeweglichen Ring (31), der Permanentmagneten umfasst, zu der Welle (1) koaxial angeordnet ist, geeignet ist, um die Achse der Welle (1) zu drehen und mit dem stromaufwärtigen Ende (21) der Stange (2) gekoppelt ist, und
• eine Wicklung (32) aus Leitungsdraht, welche mit dem Gehäuse (38) des Sensors (3) fest verbunden und zu der Welle (1) koaxial ist.

5. Turbomaschine nach Anspruch 4, **dadurch gekennzeichnet, dass** die Wicklung (32) den beweglichen Ring (31) umgibt.

6. Turbomaschine nach Anspruch 4 oder 5, **dadurch gekennzeichnet, dass** der bewegliche Ring (31) und das stromaufwärtige Ende (21) der Stange (2) mittels Auskehlungen (24) gekoppelt sind.

7. Turbomaschine nach einem der vorhergehenden Ansprüche, **dadurch gekennzeichnet, dass** das stromabwärtige Ende (12) der Welle und das stromabwärtige Ende (22) der Stange (2) Auskehlungen (23) mit ergänzender Form umfassen.

8. Turbomaschine nach einem der vorhergehenden Ansprüche, **dadurch gekennzeichnet, dass** der Sensor (3) vorgeordnet einen Verschluss (51) umfasst.

## Claims

1. A turbomachine comprising a shaft (1) having an upstream end (11) and a downstream end (12), and a device for detecting breakage of the shaft (1), the device comprising:
• a rod (2) having an upstream end (21) and a downstream end (22), and placed coaxially inside the shaft (1), the downstream end (22) of the rod (2) being securely fastened to the downstream end (12) of the shaft (1) and the upstream end (21) of the rod (2) being free to rotate relative to the upstream end (11) of the shaft (1); and
• a sensor (3) suitable for detecting a difference in speed of rotation between the upstream end (21) of the rod (2) and the upstream end (11) of the shaft (1).

2. A turbomachine according to claim 1, wherein the sensor (3) comprises a housing (38) securely fastened to the upstream end (11) of the shaft (1).

3. A turbomachine according to claim 2, wherein the sensor (3) is in the form of a hollow cylinder coaxial with the shaft (1).

4. A turbomachine according to claim 3, wherein the sensor (3) comprises:
• a rotary moving ring (31) including permanent magnets that is disposed coaxially with the shaft (1), being capable of turning about the axis of the shaft (1) and being coupled to the upstream end (21) of the rod (2); and
• a conductive wire winding (32) secured to the housing (38) of the sensor (3) and coaxial with the shaft (1).

5. A turbomachine according to claim 4, wherein the winding (32) surrounds the moving ring (31).

6. A turbomachine according to claim 4 or 5, wherein the moving ring (31) and the upstream end (21) of the rod (2) are coupled together by means of splines (24).

7. A turbomachine according to any of claims 1 to 6, wherein the downstream end (11) of the shaft (1) and the downstream end (22) of the rod (2) include complementary splines (23).

8. A turbomachine according to any of claims 1 to 7, wherein the sensor (3) includes an upstream plug (51).
